Europäisches Patentamt

(19) **European Patent Office**

Office européen des brevets

(11) Publication number: **0 019 332**
**B1**

(12) EUROPEAN PATENT SPECIFICATION

(45) Date of publication of patent specification: **27.07.83**

(51) Int. Cl.³: **A 22 B 3/06**

(21) Application number: **80200420.0**

(22) Date of filing: **02.05.80**

(54) An apparatus for electrically stunning animals to be slaughtered.

(30) Priority: **10.05.79 NL 7903681**

(43) Date of publication of application:
**26.11.80 Bulletin 80/24**

(45) Publication of the grant of the patent:
**27.07.83 Bulletin 83/30**

(84) Designated Contracting States:
**AT BE CH DE FR GB IT LI LU NL SE**

(56) References cited:
**DE - C - 532 368**
**NL - A - 6 702 456**
**NL - A - 7 514 368**
**NL - A - 7 705 519**

(73) Proprietor: **MACHINEFABRIEK G.J. NIJHUIS B.V.**
**Parallelweg 4**
**NL-7102 DE Winterswijk (NL)**

(72) Inventor: **Nijhuis, Johan Willem**
**Haitsma Mulierweg 53**
**Winterswijk (NL)**

(74) Representative: **van der Beek, George Frans, Ir.**
**et al,**
**Nederlandsch Octrooibureau P.O. Box 29720**
**NL-2502 LS The Hague (NL)**

Courier Press, Leamington Spa, England.

## An apparatus for electrically stunning animals to be slaughtered

The invention relates to an apparatus for electrically stunning animals to be slaughtered in particular pigs, comprising two endless conveyors, said conveyors being operable to run parallel to each other and at a synchronized rate and being positioned to form a substantially V-shaped passageway therebetween, as well as a pair of electrodes or sets of electrodes, said electrodes being adapted to engage the head of the animal to be stunned, said electrodes furthermore being adapted to extend downwardly to said V-shaped passageway in a spaced relationship to each other and mounted to be movable out of said passageway.

An apparatus of the above type is known from the Dutch Patent Application 77.05519 laid open to public inspection.

In said known apparatus two sets of electrodes are provided which electrodes are operable to swing about horizontal shafts arranged above the conveyors, which electrodes are adapted to engage the head of the animal to be stunned and which electrodes upon engagement with the head of the animal provide for a jolt of current through the head of the animal thus causing the stunning.

In stunning animals it is of utmost importance that the stunning is caused immediately by a jolt of intense current lasting a short time. A jolt of current of insufficient strength due to a bad contact in particular if there occur yet also interruptions, may lead to a stress condition causing a change of the pH-value in the meat to an undesired value and may lead in case of insufficient stunning to muscular contractions and internal bleedings and bone breakage caused thereby which on its turn may lead to a depreciation of the value of the meat.

Moreover, it is required that such apparatuses are capable of providing high production levels of for instance the order of 600 pigs per hour, this being possible with a short stunning time provided however that an excellent contact is assured during this short time.

In the known apparatus the head of the animal engages the first electrode or the first set of electrodes which electrode(s) pass(es) across the head of the animal. When the animal thereupon engages a second electrode there will occur a passage of current capable of causing the stunning. For achieving the high production level the conveyors move at such a rate that during the short period of current passage the animal will yet be displaced over a considerable distance, for instance a distance of 30 cm. The corresponding displacement of the electrodes with respect to the head of the animal causes varying contact resistances between the electrode surface and the head of the animal and hence an unevenness in the stunning whereas in view of the length of the path along which the electrodes may pass across the head it may be very well possible that the electrodes first engaging the head will engage the body too far behind the head during the period of current passage whereby the current pass may acquire a less desired pattern during the period of current passage.

The object of the invention is to improve in this situation.

In accordance with the invention this object is attained in that all electrodes are mounted in a frame, said frame being arranged above said conveyors and being operable to be moved in the longitudinal direction of the conveyors, said frame furthermore being operably connected to a driving mechanism by means of which such a reciprocating movement may be imparted to said frame that the rate of the forward movement is the same as or somewhat lower than the rate of the movement of the conveyors.

Thereby it is achieved that at the moment the electrodes have acquired the proper position on the head of the animal the electrodes will move together with the head and will consequently maintain the contact position on the head or in case of a very slight relative movement the position the electrodes on the head will but slightly change during the passage of current. This assures a proper contact and consequently a proper quick stunning of the animal during the entire period of the current passage.

The same result may be achieved by interrupting the movement of the conveyors during the passage of current. This would then however lead to a troublesome operation and a slowdown thereof.

Preferably the operation of the drive mechanism is dependent on the closure of the current circuit between the successive electrodes, that is to say that at the same moment the current starts to flow the drive mechanism is put into operation. The closure of the current circuit between the electrodes may be conducive to switching in the movement of the frame in the direction of the movement of the conveyors either via a time switch or not, whereas this movement of the frame will be reversed at the end of the stroke of the frame.

Animals arriving in such an apparatus sense danger and are stressed and disquiet which in itself is already of detriment to the quality of the meat. Hence it is desirable that the movable frame including the electrodes and the drive mechanism is the least noisy as possible. This may be achieved in that the drive mechanism comprises a hydraulic cylinder. Such a hydraulic drive mechanism moreover permits an easy adaptation to the desired rate of movement.

According to the invention the frame may furthermore be provided with runners having a V-shaped running surface, said runners running between top and bottom rails having a V-shaped cross section. Such a guide runs easily, whereas it is possible to meet blows in an upward direction which may be caused by the head of the animal.

It is conceivable to use other guides instead of runners. However it is of importance that in all cases the guide surfaces or running surfaces of the rails and/or of the runners consist of or are covered with a sound proofing material, respectively.

It should be remarked that the movement of the electrodes together with the movement of the animal to be stunned is also quite meaningful if the electrodes are arranged next to each other instead in a consecutive sense so that the passage of current occurs through the head in transverse direction as is for instance known for a pair of manually operated stunning tongs.

The invention will now be elucidated further in detail with reference to the drawings.

Figure 1 shows a side elevation of the apparatus according to the invention in which the conveyors have been omitted.

Fig. 2 shows an end view of the apparatus represented in Fig. 1 in which the conveyors have been shown diagrammatically.

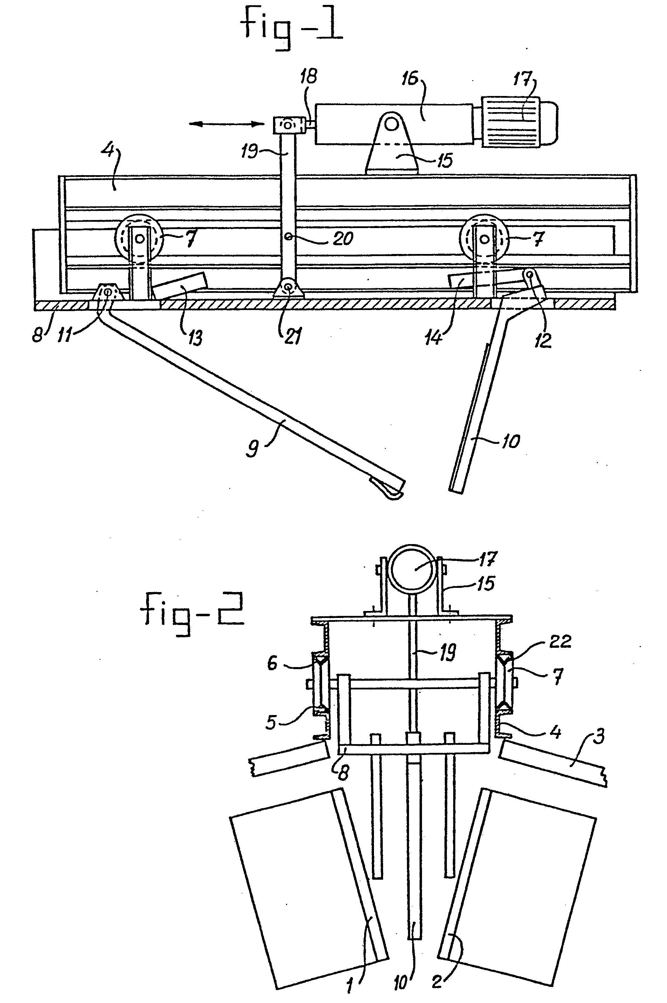

Fig. 2 diagrammatically show two endless conveyors 1 and 2, which conveyors have been positioned to form a substantially V-shaped passageway therebetween. These conveyors are arranged within a frame 3 the top parts of which have been represented. A frame 4 has been fastened to said frame 3, said frame 4 comprising lower U-shaped profiles and upper profiles the flanges of which facing each other are provided with V-shaped rail surfaces 5 and 6.

Between the rail surfaces there are accommodated the runners 7, four in number of the frame 8 from which the sets of electrodes 9 and 10 are suspended, said sets of electrodes being operable to swing about horizontal shafts 11 and 12, each one of which electrodes 9 and 10 being coupled to spring means 13 and 14, respectively.

In a support 15 the frame 4 carries a hydraulic cylinder 16 including a motor driven pump 17. The piston rod 18 is hingedly fastened to a lever 19 said lever having a fixed hinge point 20 in the frame 4 and being hingedly connected to the frame 8 at 21.

When the position rod 18 is extended i.e. moves to the left hand side in Fig. 1 the frame 8 will move to the right hand side, this being the direction of movement of the conveyors 1 and 2.

It is conceivable to use other electrode arrangements instead of the one shown.

The V-shaped guide rails 5 and 6 are coated with a teflon layer 22.

Upon originating a passage of current from the electrode(s) 10 to the electrode(s) 9 or with some delay a not shown normal switching circuit switches the drive 17 in operation whereby the hydraulic cylinder extends the piston rod at such a rate that the frame 8 moves with a similar rate as the conveyors 1 and 2.

The reversal of the movement may be determined by a time switch or by a switch mounted on a stop.

At a production level of 600 pigs per hour there will be available six seconds per animal one second or several seconds of which is or are required, respectively, for the stunning so that a sufficient amount of time remains for the return movement.

## Claims

1. An apparatus for electrically stunning animals to be slaughtered, in particular pigs, comprising two endless conveyors (1, 2), said conveyors being operable to run parallel to each other and at a synchronized rate and being positioned to form a substantially V-shaped passageway therebetween, as well as a pair of electrodes (9, 10) or sets of electrodes, said electrodes being adapted to engage the head of the animal to be stunned, said electrodes (9, 10) further being adapted to extend downwardly into said V-shaped passageway and mounted to be movable out of said passageway, characterized in that all said electrodes (9, 10) are mounted in a frame (8), said frame (8) being arranged above said conveyors (1, 2) and being operable to be moved in the longitudinal direction of the conveyor, said frame (8) furthermore being operably connected to a driving mechanism (15, 16, 17, 18, 19, 20, 21) by means of which such a reciprocating movement may be imparted to said frame (8) that the rate of the forward movement is the same as or somewhat lower than the rate of movement of the conveyors (1, 2).

2. The apparatus according to claim 1, characterized in that the operation of the drive mechanism (15, 16, 17, 18, 19, 20, 21) is dependent on the closure of the current circuit between the successive electrodes (9, 10).

3. The apparatus according to claim 2, characterized in that the closure of the current circuit between the electrodes (9, 10) is conducive to switching in the movement of the frame (8) in the direction of movement of the conveyors (1, 2) either via a time switch or not, said movement of the frame being reversed at the end of the stroke of the frame (8).

4. The apparatus according to claim 1, 2 or 3, characterized in that the drive mechanism (15—21) comprises a hydraulic cylinder (16).

5. The apparatus according to any one of the preceding claims, characterized in that the frame (8) is provided with runners (7) having a V-shaped running surface, said runners (7) running between top and bottom rails having a V-shaped cross section (5, 6).

6. The apparatus according to any one of the preceding claims, characterized in that the guides of the frame (8) in particular the running surface (5, 6) of the rails and/or the runners (7) consists of or are covered with a sound proofing material (22) respectively.

## Revendications

1. Appareil pour étourdir électriquement des animaux à abattre, en particulier des porcs, comprenant deux convovoyeurs sans fin (1, 2), lesdits convoyeurs (1, 2) pouvant être actionnés pour se déplacer parallèlement entre eux et à une vitesse synchronisée et étant positionnés de façon à former entre eux un passage essentiellement profilé en V, ainsi que deux électrodes (9, 10) ou groupes d'électrodes, lesdites électrodes (9, 10) étant agencées pour entrer en contact avec la tête de l'animal à étourdir lesdites électrodes (9, 10) étant en outre agencées pour s'étendre vers le bas dans le passage profilé en V et étant montées pour être déplaçables hors dudit passage, caractérisé en ce que toutes les électrodes (9, 10) sont montées dans un châssis (8), ledit châssis (8) étant placé au-dessus desdits convoyeurs (1, 2) et pouvant être actionné pour être déplacé dans la direction longitudinale du convoyeur, ledit châssis (8) étant en outre relié fonctionnellement à un mécanisme d'entraînement (15, 16, 17, 18, 19, 20, 21) au moyen duquel on peut faire déplacer alternativement ledit châssis (8) de telle sorte que la vitesse du mouvement d'avancement soit égale ou un peu inférieure à la vitesse de mouvement des convoyeurs (1, 2).

2. Appareil selon la revendication 1, caractérisé en ce que le fonctionnement du mécanisme d'entraînement (15, 16, 17, 18, 19, 20, 21) est fonction de la fermeture du circuit électrique entre les électrodes successives (9, 10).

3. Appareil selon la revendication 2, caractérisé en ce que la fermetur du circuit électrique entre les électrodes (9, 10) provoque la commutation du mouvement du châssis (8) dans la direction de mouvement des convoyeurs (1, 2), par l'intermédiaire d'une minuterie ou non, ledit mouvement du châssis étant inversé à la fin de la course du châssis (8).

4. Appareil selon l'une des revendications 1, 2 ou 3, caractérisé en ce que le mécanisme d'entraînement (15—21) comprend un cylindre hydraulique (16).

5. Appareil selon l'une quelconque des revendications 1 à 4, caractérisé en ce que le châssis (8) est pourvu de roulettes (7) ayant une surface de roulement en forme de V, lesdites roulettes (7) se déplaçant entre des rails supérieur et inférieur ayant une section droite en forme de V (5, 6).

6. Appareil selon l'une quelconque des revendications 1 à 5, caractérisé en ce que les guides du châssis (8), en particulier la surface de roulement (5, 6) des rails et/ou les roulettes (7), sont constitués ou recouverts respectivement d'une matière d'amortissement sonique (22).

## Patentansprüche

1. Vorrichtung zur elektrischen Betäubung von Schlachttieren, insbesondere Schweinen, bestehend aus zwei endlosen Förderbändern (1, 2), wobei die Förderbänder parallel zueinander und mit synchronisierter Geschwindigkeit laufend betreibbar und unter Bildung eines im wesentlichen V-förmigen Durchlasses angeordnet sind, sowie aus einem Paar von Elektroden (9, 10) oder Elektrodensätzen, wobei die Elektroden zur Anlage an den Kopf der Schlachttiere und weiter dazu ausgelegt sind, sich nach unten in den V-förmigen Durchlaß zur erstrecken und sich aus diesem Durchlaß heraus bewegen zu lassen, dadurch gekennzeichnet, daß die Elektroden (9, 10) in einem Rahmen (8) angebracht sind, der oberhalb der Förderbänder (1, 2) angeordnet und in deren Längsrichtung bewegbar ist, daß der Rahmen (8) außerdem mit einem Antriebsmechanismus (15, 16, 17, 18, 19, 20, 21) wirksam verbunden ist, durch den der Rahmen (8) derartig in eine hin- und hergehende Bewegung versetzt werden kann, daß die Geschwindigkeit der Vorwärtsbewegung gleich oder etwas geringer ist als die Bewegungsgeschweindigkeit der Förderbänder (1, 2).

2. Vorrichtung nach Anspruch 1, dadurch gekennzeichnet, daß die Betätigung des Antriebsmechanismus (15, 16, 17, 18, 19, 20, 21) vom Schließen des Stromkreises zwischen den aufeinanderfolgenden Elektroden (9, 10) abhängig ist.

3. Vorrichtung nach Anspruch 2, dadurch gekennzeichnet, daß die Schließung des Stromkrieses zwischen den Elektroden (9, 10) die Einschaltung der Bewegung des Rahmens (8) in Bewegungsrichtung der Förderbänder (1, 2) entweder über einen Zeitschalter oder nicht bewirkt, wobei die Bewegung des Rahmens am Ende des Bewegungshubs des Rahmens (8) umgekehrt wird.

4. Vorrichtung nach Anspruch 1, 2 oder 3, dadurch gekennzeichnet, daß der Antriebsmechanismus (15, bis 21) einen hydraulischen Zylinder (16) enthält.

5. Vorrichtung nach einem der vorangehenden Ansprüche, dadurch gekennzeichnet, daß der Rahmen (8) mit Rollen (7) versehen ist, die eine V-förmige Lauffläche aufweisen und zwischen oberen und unteren Schienen mit V-förmigen Querschnitt (5, 6) laufen.

6. Vorrichtung nach einem der vorangehenden Ansprüche, dadurch gekennzeichnet, daß die Führungen des Rahmens (8) insbesondere die Schienenlauffläche (5, 6) und/oder die Rollen entweder aus einem geräuschdämpfenden Material (22) bestehen oder mit einem solchen bedeckt sind.

0 0 19 332

Fig-1

Fig-2